# EUROPEAN PATENT APPLICATION

(11) **EP 4 813 347 A1**
(43) Date of publication of application: **30.09.2026**
(21) Application number: 25165641.9
(22) Date of filing: 24.03.2025
(51) Int. Cl.: A61C 13/00, B23B 31/117, B23C 3/16, B23Q 17/24

(54) **DENTAL TOOL BEARING APPARATUS AND DENTAL TOOL MEASURING APPARATUS**

(71) Applicant: Dental Concept Systems GmbH, 34399 Wesertal (DE)
(72) Inventor: Leininger, Matthias, 90537 Feucht (DE); Heelein, Jonas, 90469 Nürnberg (DE); Föste, Daniel, 90478 Nürnberg (DE)
(74) Representative: Wittmann, Günther

(57) **Abstract**

The invention discloses a dental tool measurement apparatus (100), adapted to bear and measure a dental cutting tool, comprising:
- first bearing device, said first bearing device comprising:
o a first support arrangement comprising two support elements adapted to contact in use a shaft of the dental cutting tool;
o a second support arrangement comprising two support elements adapted to contact in use the shaft of the dental cutting tool, wherein the second support arrangement is spaced apart from the first support arrangement in the axial direction of the dental cutting tool; and
o a rotation element contacting in use the dental cutting tool and configured to rotate the dental cutting tool; and

- a first motor coupled to a drive element that contacts the rotation element of the first bearing device to rotate the dental cutting tool around its longitudinal axis
- a controller;
- an illumination device adapted to illuminate in use the dental cutting tool; and
- an image acquisition device adapted to image in use the dental cutting tool;
- wherein the controller is adapted to in use:
- to instruct the illumination device to illuminate at least a part of the dental cutting tool that is positioned in the first bearing device or the second bearing device;
- to instruct the first motor to rotate the dental cutting tool around its longitudinal axis; and
- to instruct the image acquisition device to acquire a plurality of images of at least a part of the dental cutting tool, while the first motor rotates the dental cutting tool around its longitudinal axis.

## Description

### Field of the Invention

The present invention relates to a dental tool bearing apparatus bearing a dental cutting tool and a dental tool measuring apparatus comprising such dental tool bearing apparatus.

### Prior Art

In dental laboratories milling machines having a rotating dental cutting tool are used for milling a dental restoration. The dental cutting tool may be a milling cutter. The dental restauration may be a ceramic dental restoration. The dental cutting tool rotates in use to cut the surface of the dental restauration.

In order to manufacture the dental restoration as accurate as possible, the actual size of the cutting tool, the actual geometry and the radial runout have to be kept within a small tolerance, such as +/- 10 µm for standard tools and +/- 5 µm for precision tools.

Currently, the actual size of the cutting tool, the actual geometry and the radial runout are not monitored during use of the cutting tool in a dental laboratory. Some cutting tools have to be replaced after a usage of one to two hours, while other cuttings tools may be used for 100 hours to 500 hours before replacement.

There is a need for a quick and low-effort inspection of a dental cutting tool in a dental laboratory. For the sake of accuracy, the dental cutting tool contactless optical inspection methods are preferred. Optical inspection methods require that the dental cutting tool is positioned accurately with respect to a camera of an optical inspection system.

A collet of a milling machine is too large for an optical inspection system and is too expensive.

### Summary of the Invention

It is an object of the invention to provide an apparatus for bearing a dental cutting tool and an apparatus for inspecting the dental cutting tool.

The object of the invention is solved by a dental tool bearing apparatus according to claim 1 and a dental tool measuring apparatus according to claim 10.

The dental tool bearing apparatus that is adapted to bear a dental cutting tool comprises a first bearing device having a first support arrangement and a second support arrangement. The first support arrangement comprises two support elements adapted to contact in use a shaft of the dental cutting tool. The second support arrangement comprises two support elements adapted to contact in use the shaft of the dental cutting tool, wherein the second support arrangement is spaced apart from the first support arrangement in the axial direction of the dental cutting tool. The first bearing device comprises a rotation element contacting in use the dental cutting tool and configured to rotate the dental cutting tool.

The dental tool bearing apparatus comprises a first motor coupled to a drive element that contacts the rotation element of the first bearing device to rotate the dental cutting tool around its longitudinal axis.

Thereby, the dental cutting tool can be rotated around its longitudinal axis with a low radial runout.

The dental cutting tool may be a milling cutter. A dental restauration may be a manufactured with the dental cutting tool ceramic dental restoration. The dental cutting tool rotates in use to cut the surface of the dental restauration.

The dental tool bearing apparatus may comprise a first support arrangement and a second support arrangement. The first support arrangement comprises two support elements adapted to contact in use the shaft of the dental cutting tool. The second support arrangement comprises two support elements adapted to contact in use the shaft of the dental cutting tool. The second support arrangement is spaced apart from the first support arrangement in the axial direction of the dental cutting tool. The second bearing device comprises a rotation element contacting in use the dental cutting tool and configured to rotate the dental cutting tool.

The dental tool bearing apparatus further comprises a location actuator adapted to locate the first bearing device and the second bearing device to a first position and a second position. In a first position the rotation element of the first bearing device contacts the drive element of the first motor and in a second position the rotation element of the second bearing device contacts the drive element of the first motor.

The first bearing device may be adapted to bear a shaft of a dental cutting tool having a first diameter, and the second bearing device may be adapted to bear a shaft of a dental cutting tool having a second diameter, wherein the first diameter may be larger than the second diameter. The first and second bearing device may be moved, such that dental cutting tools having different diameters can be inspected. The bearing element having the rotation element contacting the drive element coupled with the first motor can rotate and move the dental cutting tool for inspection. In one embodiment the first diameter may be 6 mm and the second diameter may be 9 mm.

The dental tool bearing apparatus may comprise a second motor adapted to move the first bearing device and/or second bearing device in the longitudinal direction of the dental cutting tool.

The rotation element may comprise an elastic coupling portion adapted to be coupled elastically around the shaft of the dental cutting tool. The rotation element may be manufactured from plastics, such as Polyurethane. The hardness may range from 70 Shore A to 105 Shore A, preferably from 80 Shore A to 95 Shore A.

In one embodiment the rotation element may be a gear. The drive element may also be a gear that can mesh or engage with the rotation element.

The first bearing device and the second bearing device may be coupled mechanically.

The location actor may be a manual actuation element, such as a rotation knob. The location actuator many pivot the first bearing device and second bearing device. In another embodiment, the actuation element may shift first bearing device and second bearing device translatory. It is to be understood that the location element may be an active actuation element, such as an electric, hydraulic or pneumatic actuation element.

The first support arrangement and/or the second support element of the first and/or second bearing device may comprise a downholder, wherein the first support element, the second support element and the downholder are located in a plane perpendicular to the longitudinal axis of the dental cutting tool and the downholder is located above the first bearing device and second bearing device.

In this embodiment, the dental cutting tool is beared from bottom and the top.

The two support elements may be spheres, the downholder may be a sphere, the two support elements may be ceramic spheres and/or the downholder may be a ceramic sphere.

The ceramic spheres are cost effective, can be mounted with a low effort in the apparatus and do not require any adjustment.

The spheres may be supported such that they cannot rotate and/or the ceramic spheres are supported such that they cannot rotate.

Rotating spheres must be mounted very precisely, and dust or impurities on rolling surfaces would be rolled in between the rolling sphere and the shaft of the dental cutting tool and thus lead to inaccuracies.

It is an advantage of the present invention that, since the shaft of the dental cutting tool slides on the no-rotating spheres, dust is pushed away from the sphere and shaft of the dental cutting tool instead of being drawn in between the sphere and the shaft of the dental cutting tool.

The dental tool bearing apparatus may comprise a stop adapted to be abutted by a distal end of the dental cutting tool inserted into the first bearing device and/or second bearing device. The rotation axis of the drive element may be tilted with respect to the rotation axis of the rotation element such that in use the distal end of the dental cutting tool generates a force against the stop. A cutting surface is arranged at a proximal end of the dental cutting tool. The distal end is arranged opposite to the proximal end. The rotation axis of the drive element may be tilted with respect to the rotation axis of the rotation element by 0,5 ° to 5°.

Thereby, a backlash-free bearing of the dental cutting tool may be achieved.

The invention also discloses a dental tool measuring apparatus comprising the dental tool bearing apparatus described above, a controller, an illumination device adapted to illuminate in use the dental cutting tool and an image acquisition device adapted to image in use the dental cutting tool. The controller is adapted in use to instruct the illumination device to illuminate at least a part of the dental cutting tool that is positioned in the first bearing device or the second bearing device, to instruct the first motor to rotate the dental cutting tool around its longitudinal axis and to instruct the image acquisition device to acquire a plurality of images of at least a part of the dental cutting tool, while the first motor rotates the dental cutting tool around its longitudinal axis.

The dental tool measuring apparatus may further comprise a second motor adapted to move the first bearing device and/or the second bearing device or the image acquisition device in the longitudinal direction of the dental cutting tool, wherein the controller may be adapted to instruct the second motor to move the first bearing device or the image acquisition device in the longitudinal direction of the dental cutting tool and to instruct the image acquisition device to acquire a plurality of images of at least a part of the dental cutting tool, while the second motor moves the first bearing device and/or second bearing device or the image acquisition device in the longitudinal direction of the dental cutting tool. The controller may be adapted to instruct the image acquisition device to acquire a plurality of images of at least a part of the dental cutting tool, while the first motor rotates the dental cutting tool around its longitudinal axis and the second motor moves the first bearing device and/or second bearing device or the image acquisition device in the longitudinal direction of the dental cutting tool.

The image acquisition device continuously acquires images of the dental cutting tool while the dental cutting tool is rotated and moved translatory. In another embodiment, the image acquisition device continuously acquires images of the dental cutting tool while the dental cutting tool is rotated and the image acquisition device is moved translatory. The acquired images may be stored in a memory.

The illumination device and the image acquisition device may be arranged to form a backlighting.

The controller may comprise at least one memory and at least one processor and at least one input/output interface.

The controller may be adapted to determine the diameter of the dental cutting tool, if the longitudinal axis of the dental cutting tool is aligned in use with the horizontal axis of the coordinate system of the plurality of images by determining a predetermined vertical line in each of the plurality of images based on the coordinate system of the plurality of images. Then, the controller determines by analyzing the plurality of images acquired during rotation of the dental cutting tool a maximum extension of the imaged dental cutting tool in the vertical direction of the coordinate system of the plurality of images, wherein the maximum extension is located on the predetermined vertical line in the coordinate system of the plurality of images. Then, the controller determines by analyzing the plurality of images acquired during rotation of the dental cutting tool a minimum extension of the imaged dental cutting tool in the vertical direction of the plurality of images, wherein the minimum extension and the maximum extension are located on the same predetermined vertical line. Then, the controller determines the diameter of the dental cutting tool at the predetermined vertical line in the image by calculating a difference between the maximum extension and minimum extension of the dental cutting tool on the vertical line of the coordinate system of the plurality of images.

All images have the same coordinate system. The extension of the imaged dental cutting tool may be calculated in pixels or subpixels.

The controller may be further adapted to determine the diameter of the dental cutting tool, if the longitudinal axis of the dental cutting tool is aligned in use with the vertical axis of the coordinate system of the plurality of images, by determining a predetermined horizontal line in each of the plurality of images based on the coordinate system of the plurality of images.

Then, the controller determines by analyzing the plurality of images acquired during rotation of the dental cutting tool a maximum extension of the imaged dental cutting tool in the horizontal direction of the plurality of images, wherein the maximum extension is located on a predetermined horizontal line. Then, the controller determines by analyzing the plurality of images acquired during rotation of the dental cutting tool a minimum extension of the dental cutting tool in the horizontal direction of the plurality of images, wherein the minimum extension and the maximum extension are located on the same horizontal line. Then, the controller determines the diameter of the dental cutting tool at the predetermined horizontal line by calculating the difference between the maximum extension and minimum extension of the imaged dental cutting tool on the horizontal line of the coordinate system of the plurality of images.

The controller is further adapted to determine the diameter of the dental cutting tool, if the longitudinal axis of the dental cutting tool is not aligned in use with the horizontal axis or the vertical axis of the coordinate system of the image acquisition device, by determining a predetermined line orthogonal to the longitudinal direction of the dental cutting tool in the plurality of images based on the coordinate system of the plurality of images. Then, the controller determines by analyzing the plurality of images acquired during rotation of the dental cutting tool a maximum extension of the imaged dental cutting tool in a first radial direction on a predetermined line orthogonal to the longitudinal direction of the dental cutting tool. Then, the controller determines by analyzing the plurality of images acquired during rotation of the dental cutting tool a minimum extension of the imaged dental cutting tool in a second radial direction opposite to the first direction and located on the same predetermined line as the first radial direction. Then, the controller determines the diameter of the dental cutting tool at the predetermined line by calculating determining the difference between the maximum extension of the dental cutting tool in the first radial direction and the maximum extension of the dental cutting tool in a second radial direction.

### Brief Description of the Drawings

The invention is now described in more detail with reference to the accompanying drawings showing non-limiting embodiments of the present invention, wherein
Figure 1 shows a top view of a dental tool measuring apparatus according to the present invention;
Figure 2 shows a perspective view of a dental tool measuring apparatus according to the present invention;
Figure 3 is a cut-away schematic top view showing a first bearing device supporting the dental cutting tool by a plurality of spheres;
Figure 4 is a cut-away schematic front view showing the first bearing device supporting the dental cutting tool by a plurality of spheres;
Figure 5 shows the first bearing device and a second bearing device of the dental tool bearing apparatus; and
Figures 6a to 6c show schematically the opto-electronical inspection of the dental cutting tool.

### Detailed Description of the Drawings

The drawings show exemplary embodiments of the present invention. The drawings are merely schematic and not necessarily drawn to scale.

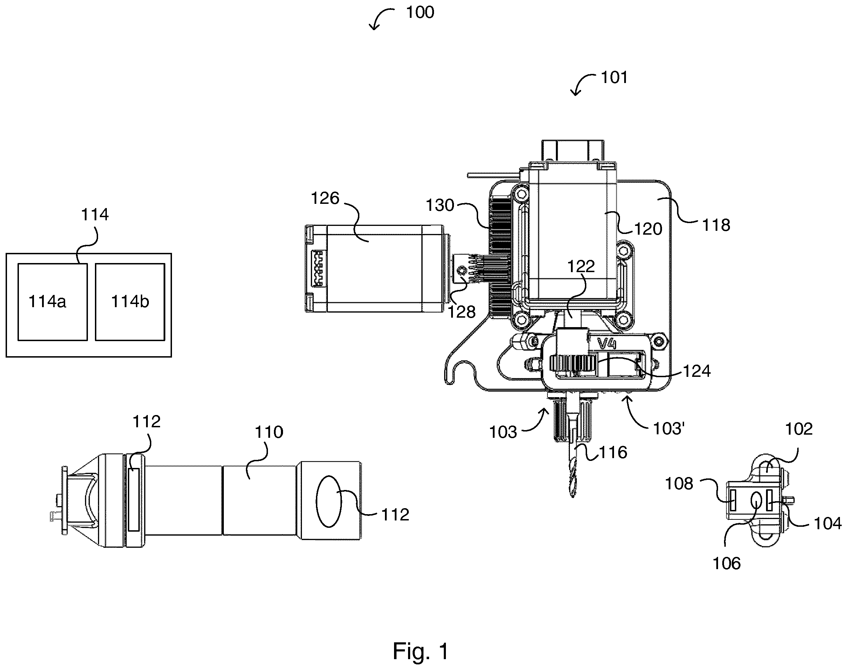

Figure 1 shows a schematic top view of a dental tool measuring apparatus 100 according to the present invention. The dental tool measuring apparatus 100 comprises a dental tool bearing apparatus 101, a controller 114 and an illumination device 102 and an image acquisition device 110.

The illumination device 102 comprises a light source 104, such as an LED array, at least one lens 106 and a diffuser 108. The light source 104 is connected with the controller 114, such as by a wire (not shown). When the controller 114 switches the light source 104 on, light exits the light source 104 and the light is preferably formed into a plurality of essentially parallel beans by the at least one lens 106 and impinges the diffuser 108. The diffuser 108 transform the impinging light to a uniform light emission suitable for backlighting. The light passes the dental cutting tool 116 to be measured and impinges on at least one lens 112 of the image acquisition device 110. The at least one lens 112 focuses the image of the dental cutting tool 106 on the image acquisition sensor 112, such as a CCD array or CMOS sensor. The image acquisition sensor 112 can be connected with the controller 114 by a at least one wire (not shown).

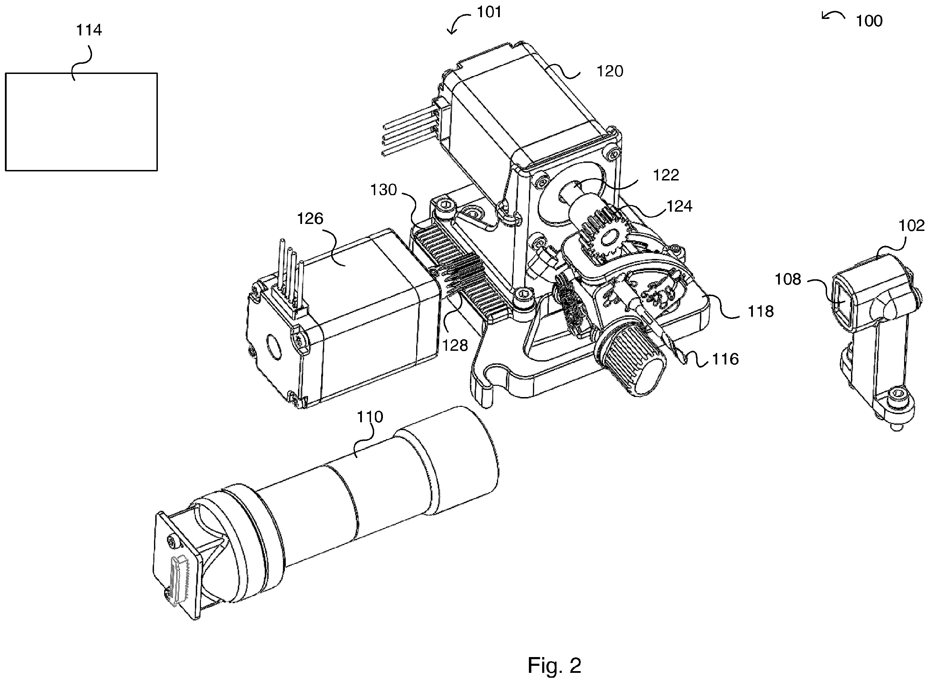

Reference is also made to figure 2 showing a schematic perspective view of the dental tool measuring apparatus 100 and dental tool bearing apparatus 101. The dental tool bearing apparatus 101 comprises a first motor 120 and a second motor 126.

The first motor 120 is secured on a base 118 and comprises a shaft 122 on which a drive gear 124 is mounted. The drive gear 124 meshes with a rotation gear (not shown in figures 1 and 2), in which the dental cutting tool 106 is releasably mounted. Thus, if the controller 114 connected to the second motor 120 by at least one wire (not shown) first instructs the second motor 120 to rotate, the dental cutting tool is rotated.

The controller 114 is connected to the second motor 126 by at least one wire (not shown). The second motor 126 comprises a shaft, on which a gear 128 is mounted that meshes with a rack 130 mounted on the base 118. If the controller 114 instructs the second motor 126 to rotate, the gear 128 moves the rack 130, the base 118, the first motor 120 and the dental cutting tool 116 in the longitudinal direction.

Thus, if the second motor 126 and the first motor 120 rotate, the dental cutting tool 116 is rotated and moved longitudinally. During the rotation and the longitudinal movement of the dental cutting tool 116 the illumination device 102 illuminates the dental cutting tool 116 and the image acquisition device 110 acquires a plurality of images of the dental cutting tool 116, which are transmitted to the controller 114 and stored in a memory 114a of the controller 114.

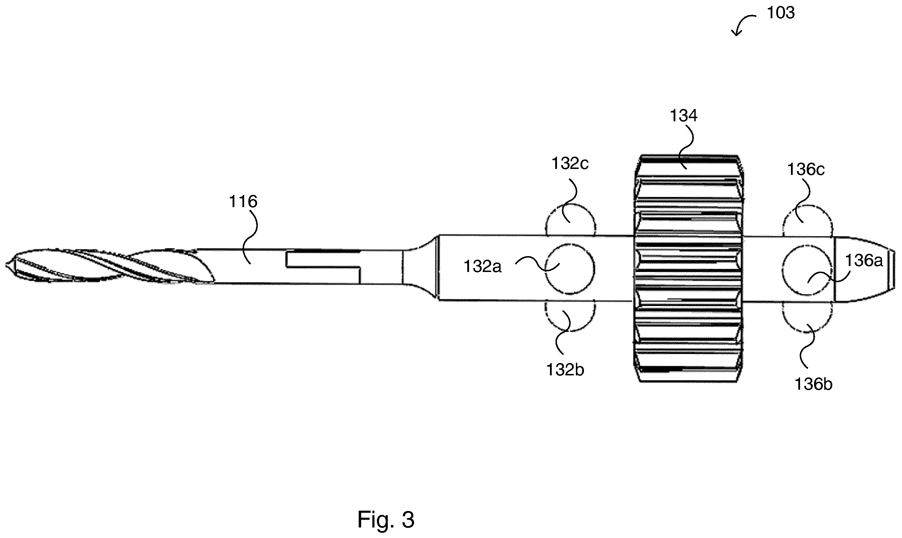

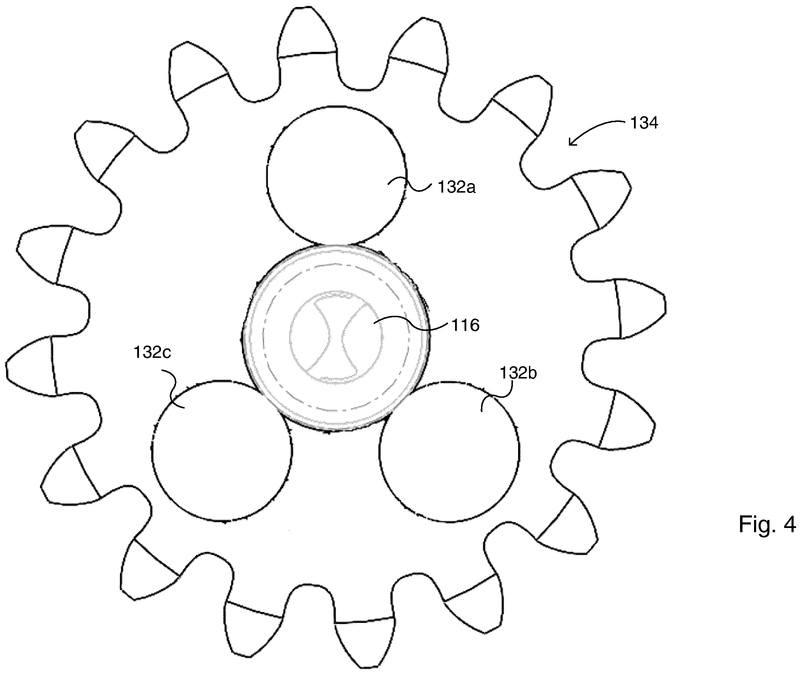

Reference is made to figure 3 showing a cut-away schematic top view of a first bearing device 103 supporting the dental cutting tool 116 by a plurality of spheres 132a, 132b, 132c, 136a, 136b, 136c and to figure 4 showing a cut-away schematic front view of the second bearing device supporting the dental cutting tool 116 by a plurality of spheres 132a, 132b, 132c. When the dental cutting tool 116 is positioned in the dental tool bearing apparatus, the dental cutting tool 116 is pushed into a first plurality of spheres 132a, 132b, 132c into the rotation gear 134 and into a second plurality of spheres 136a, 136b, 136c.

The inner section of the rotation gear 134 is made of an elastic material such that the shaft of the dental cutting tool 116 is held in a press fit manner. The inner section of the rotation gear 134 may be made of polyurethane, particularly thermoplastic polyurethane and may have a hardness of 70 to 99 Shore A, preferably between 80 and 95 Shore A. To increase flexibility of the inner section of the rotation gear 134 at least one recess (not shown) may be formed in the inner portion of the rotation gear 134.

The first sphere 132a of the first plurality of spheres and the first sphere 136a of the second plurality of spheres are positioned vertically above the center of the dental cutting tool 116. The second sphere 132b of the first plurality of spheres and the second sphere 136b of the second plurality of spheres are positioned below the dental cutting tool 116 at an angle of approximately -45° with respect to a vertical line passing the center of the dental cutting tool. The third sphere 132c of the first plurality of spheres and the third sphere 136c of the second plurality of spheres are positioned below the dental cutting tool 116 at an angle of approximately 45° with respect to a vertical line passing the center of the dental cutting tool 116.

The first plurality of spheres forms a first support arrangement, and the second plurality of spheres forms a second support arrangement, wherein the first sphere 132a of the first plurality of spheres and the first sphere 136a of the second plurality of spheres act as downholders.

The sphere 132a, 132b, 132c of the first plurality of sphere and the spheres 136a, 136b, 136c of the second plurality of spheres are ceramic spheres. The spheres 132a, 132b, 132c, 136a, 136b, 136c are supported such that they cannot rotate.

Rotating spheres must be mounted very precisely, and dust or impurities on the rolling surfaces would be rolled in between the rolling element and the shaft of the dental cutting tool and thus lead to inaccuracies. It is an advantage of the present invention that, since the shaft of the dental cutting tool slides on the no-rotating spheres, dust is pushed away from the sphere and shaft of the dental cutting tool instead of being drawn in between the sphere and the shaft of the dental cutting tool.

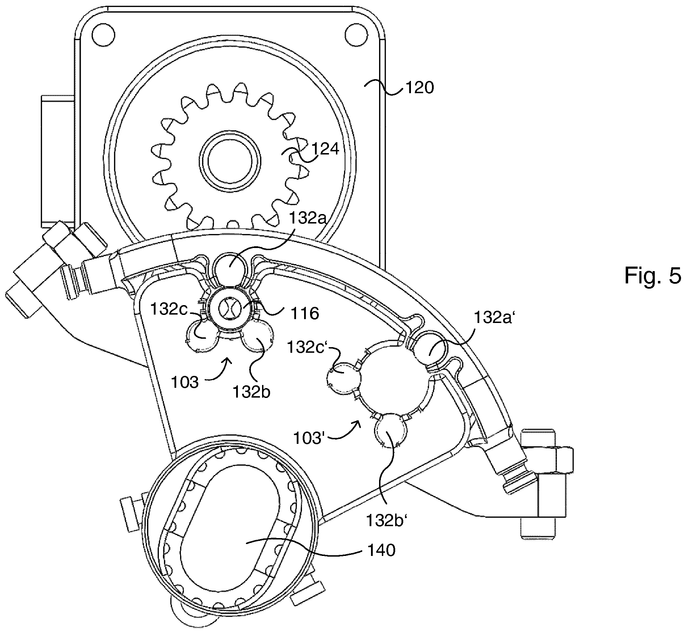

Reference is made to figure 5 showing the first bearing device 103 and a second bearing device 103' of the dental tool bearing apparatus 101. The first bearing device 103 has been described above. The rotation gear (not shown in figure 5) meshes with the drive gear 124. The first sphere 132a, the second sphere 132b and the third sphere 132c of the first bearing device are arranged such that a dental cutting tool having a first diameter, such as 6 mm can be supported. The second bearing device 103' comprises a first plurality of spheres 132a', 132b', 132c'and a second plurality of three spheres (not shown in figure 5), which are arranged such that a dental cutting tool having a second diameter, such as 9 mm, can be supported. The second diameter may be larger than the first diameter.

In use a user may remove the dental cutting tool 116 from the first bearing device and manually pivot the first bearing device 103 and the second bearing device 103' from a first position shown in figure 5, in which the drive gear 124 meshes with the rotation gear of the first bearing device 103 into a second position (not shown) in which the drive gear 124 mesh as with the rotation gear (not shown) of the second bearing device 103' by rotating the actuator 140 manually. The user may insert a cutting tool into an opening of the rotation gear of the second bearing device 103', such that the dental cutting tool is supported by the spheres 132 a', 132b', 132c' of the first bearing device and the second plurality of spheres of the second bearing device 103'. Thereby, dental cutting tools having different diameters may be inspected by the dental tool measuring apparatus according to the present invention.

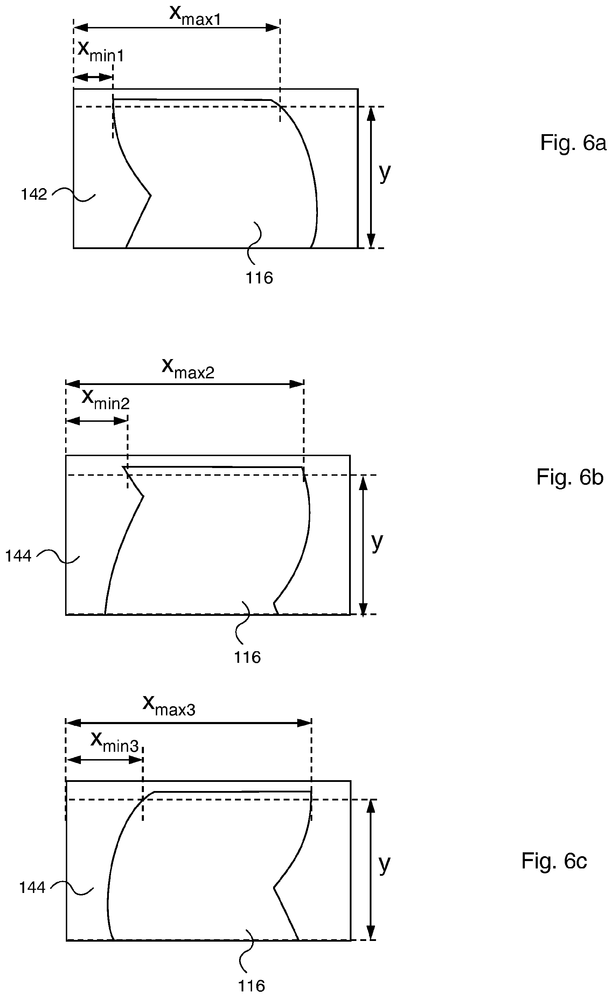

Reference is made to figures 6a to 6c showing schematically a method of inspecting a dental cutting tool 116. More particularly in the embodiment shown in figures 6a to 6c the diameter of the dental cutting tool is determined at a height y. It is to be understood an arbitrary parameter of the dental cutting tool may be determined with the dental tool measuring apparatus 100 according to the present invention. Figures 6a to 6c show schematically the images acquired by the image acquisition device 110. These images are processed by the controller 114. For reasons of illustration the shade of the dental cutting tool 116 due to backlighting is not shown in solid, but only the outline of the shade of the dental cutting tool 116 is shown.

At the step shown in figure 6a, the minimum extension xₘᵢₙ₁ and the maximum extension xₘₐₓ₁ of the shade of the dental cutting tool 116 is determined in the first acquired image 142 by a processor 114b of the controller 114. Then, at the step shown in figure 6b, the minimum extension xₘᵢₙ₂ and the maximum extension xₘₐₓ₂ of the shade of the dental cutting tool 116 is determined in the second acquired image 144 by the processor 114b of the controller 114. Thereafter, at the step shown in figure 6c, the minimum extension xₘᵢₙ₃ and the maximum extension xₘₐₓ₃ of the shade of the dental cutting tool 116 is determined in the third acquired image 144 by the processor 114b of the controller 114.

Then, the processor 114b of the controller 114 determines the global minimum x_{minG} of all determined minimum values xₘᵢₙ₁, xₘᵢₙ₂, xₘᵢₙ₃ and the global maximum x_{maxG} of all determined maximum values xₘₐₓ₁, xₘₐₓ₂, xₘₐₓ₃. The width of the dental cutting tool 116 at the height y is determined by the processor 114b of the controller 114 by the formula: $width \left(y\right) = {x}_{maxG} - {x}_{minG} ;$

The method has been exemplarily described by three images. In practice, the method may use a plurality of 50 or more images to determine a parameter of the dental cutting tool 116. It is to be understood that the controller 114 may be implemented as a single computer, a micro-controller or a plurality of computers, a plurality of micro-controllers or the like.

It is an advantage of the present invention that the dental tool bearing apparatus 101 and the dental tool measuring apparatus 100 according to the present invention provide a stable, reliable, space saving and effort saving technique for releasably and temporarily bearing a dental cutting tool during 116 during opto-electronical inspection of the dental cutting tool 116.

## Claims

1. A dental tool bearing apparatus, adapted to bear a dental cutting tool, comprising:
- a first bearing device comprising:
∘ a first support arrangement comprising two support elements adapted to contact in use a shaft of the dental cutting tool;
∘ a second support arrangement comprising two support elements adapted to contact in use the shaft of the dental cutting tool, wherein the second support arrangement is spaced apart from the first support arrangement in the axial direction of the dental cutting tool; and
∘ a rotation element contacting in use the dental cutting tool and configured to rotate the dental cutting tool; and
- a first motor coupled to a drive element that contacts the rotation element of the first bearing device to rotate the dental cutting tool around its longitudinal axis.

2. The dental tool bearing apparatus according to claim 1, further comprising a second bearing device, said second bearing device comprising:
- a first support arrangement comprising two support elements adapted to contact in use the shaft of the dental cutting tool;
- a second support arrangement comprising two support elements adapted to contact in use the shaft of the dental cutting tool, wherein the second support arrangement is spaced apart from the first support arrangement in the axial direction of the dental cutting tool; and
- a rotation element contacting in use the dental cutting tool and configured to rotate the dental cutting tool;
wherein the dental tool bearing apparatus further comprises:
- a location actuator adapted to locate the first bearing device and the second bearing device to a first position and a second position, wherein in a first position the rotation element of the first bearing device contacts the drive element and in a second position the rotation element of the second bearing device contacts the drive element.

3. The dental tool bearing apparatus according to claim 1 or 2, wherein the rotation element comprises an elastic coupling portion adapted to be coupled elastically around the shaft of the dental cutting tool.

4. The dental tool bearing apparatus according to any one of claims 1 to 4, wherein the rotation element is a gear.

5. The dental tool bearing apparatus according to any one of 2 to 5, wherein the location actuator pivots the first bearing device and second bearing device.

6. The dental tool bearing apparatus according to any one of claims 1 to 6, wherein the first support arrangement and/or the second support element of the first and/or second bearing device further comprise:
- a downholder, wherein
- the first support element, the second support element and the downholder are located in a plane perpendicular to the longitudinal axis of the dental cutting tool; and
- the downholder is located above the first bearing device and second bearing device.

7. The dental tool bearing apparatus according to any one of claims 1 to 7, wherein
- the two support elements are spheres;
- the downholder is a sphere;
- the two support elements are ceramic spheres; and/or
- the downholder is a ceramic sphere.

8. The dental tool bearing apparatus according to claim 8, wherein
- the spheres are supported such that they cannot rotate; and/or
- the ceramic spheres are supported such that they cannot rotate.

9. The dental tool bearing apparatus according to any one of claims 1 to 9, further comprising
- a stop adapted to be abutted by a distal end of the dental cutting tool inserted into the first bearing device and/or second bearing device;
- wherein the rotation axis of the drive element is tilted with respect to the rotation axis of the rotation element such that in use the distal end of the dental cutting tool generates a force against the stop.

10. A dental tool measuring apparatus, comprising
- the dental tool bearing apparatus according to any one of claims 1 to 9;
- a controller;
- an illumination device adapted to illuminate in use the dental cutting tool; and
- an image acquisition device adapted to image in use the dental cutting tool;
- wherein the controller is adapted to in use:
- to instruct the illumination device to illuminate at least a part of the dental cutting tool that is positioned in the first bearing device or the second bearing device;
- to instruct the first motor to rotate the dental cutting tool around its longitudinal axis; and
- to instruct the image acquisition device to acquire a plurality of images of at least a part of the dental cutting tool, while the first motor rotates the dental cutting tool around its longitudinal axis.

11. The dental tool measuring apparatus according to claim 10, further comprising
- a second motor adapted to move the first bearing device and/or second bearing device or the image acquisition device in the longitudinal direction of the dental cutting tool;
- wherein the controller is adapted
- to instruct the second motor to move the first bearing device and/or second bearing device or the image acquisition device in the longitudinal direction of the dental cutting tool; and
- to instruct the image acquisition device to acquire a plurality of images of at least a part of the dental cutting tool, while the first motor rotates the dental cutting tool around its longitudinal axis and the second motor moves the first bearing device and/or second bearing device or the image acquisition device in the longitudinal direction of the dental cutting tool.

12. The dental tool measurement apparatus according to claim 10 or 11, wherein the illumination device and the image acquisition device are arranged to form a backlighting.

13. The dental tool measurement apparatus according to any one of claims 10 to 12, wherein the controller is adapted to determine the diameter of the dental cutting tool by:
- if the longitudinal axis of the dental cutting tool is aligned in use with the horizontal axis of the coordinate system of the plurality of images:
- determining a predetermined vertical line in each of the plurality of images based on the coordinate system of the plurality of images;
- determining by analyzing the plurality of images acquired during rotation of the dental cutting tool a maximum extension of the imaged dental cutting tool in the vertical direction of the coordinate system of the plurality of images, wherein the maximum extension is located on the predetermined vertical line in the coordinate system of the plurality of images;
- determining by analyzing the plurality of images acquired during rotation of the dental cutting tool a minimum extension of the imaged dental cutting tool in the vertical direction of the plurality of images, wherein the minimum extension and the maximum extension are located on the same predetermined vertical line; and
- determining the diameter of the dental cutting tool at the predetermined vertical line in the image by calculating a difference between the maximum extension and minimum extension of the dental cutting tool on the vertical line of the coordinate system of the plurality of images.

14. The dental tool measurement apparatus according to any one of claims 10 to 13, wherein the controller is adapted to determine the diameter of the dental cutting tool by:
- if the longitudinal axis of the dental cutting tool is aligned in use with the vertical axis of the coordinate system of the plurality of images;
- determining a predetermined horizontal line in each of the plurality of images based on the coordinate system of the plurality of images;
- determining by analyzing the plurality of images acquired during rotation of the dental cutting tool a maximum extension of the imaged dental cutting tool in the horizontal direction of the plurality of images, wherein the maximum extension is located on a predetermined horizontal line;
- determining by analyzing the plurality of images acquired during rotation of the dental cutting tool a minimum extension of the dental cutting tool in the horizontal direction of the plurality of images, wherein the minimum extension and the maximum extension are located on the same horizontal line; and
- determining the diameter of the dental cutting tool at the predetermined horizontal line by calculating the difference between the maximum extension and minimum extension of the imaged dental cutting tool on the horizontal line of the coordinate system of the plurality of images.

15. The dental tool measurement apparatus according to any one of claims 10 to 14, wherein the controller is adapted to determine the diameter of the dental cutting tool by:
- if the longitudinal axis of the dental cutting tool is not aligned in use with the horizontal axis or the vertical axis of the coordinate system of the image acquisition device:
- determining a predetermined line orthogonal to the longitudinal direction of the dental cutting tool in the plurality of images based on the coordinate system of the plurality of images;
- determining by analyzing the plurality of images acquired during rotation of the dental cutting tool a maximum extension of the imaged dental cutting tool in a first radial direction on a predetermined line orthogonal to the longitudinal direction of the dental cutting tool;
- determining by analyzing the plurality of images acquired during rotation of the dental cutting tool a minimum extension of the imaged dental cutting tool in a second radial direction opposite to the first direction and located on the same predetermined line as the first radial direction; and
- determining the diameter of the dental cutting tool at the predetermined line by calculating the difference between the maximum extension of the dental cutting tool in the first radial direction and the maximum extension of the dental cutting tool in a second radial direction.
